Europäisches Patentamt

(19) European Patent Office

Office européen des brevets

(11) Numéro de publication : **0 430 832 A1**

(12) **DEMANDE DE BREVET EUROPEEN**

(21) Numéro de dépôt : 90420517.6

(22) Date de dépôt : 30.11.90

(51) Int. Cl.$^5$ : **B65G 65/46, B01J 3/02**

(30) Priorité : 01.12.89 FR 8916735

(43) Date de publication de la demande :
05.06.91 Bulletin 91/23

(84) Etats contractants désignés :
AT BE CH DE DK ES GB GR IT LI LU NL SE

(71) Demandeur : PIGNAT S.A.
Z.I. Revoisson, rue Calmette
F-69740 Genas (FR)

(72) Inventeur : Hernando, Fernand
19 Boulevard Fayol
F-42700 Firminy (FR)
Inventeur : Pignat, Patrice
Les Hauts de Chassieu
F-69680 Chassieu (FR)
Inventeur : Pignat, Yves
122 rue Hénon
F-69004 Lyon (FR)

(74) Mandataire : Bratel, Gérard et al
Cabinet GERMAIN & MAUREAU B.P. 3011
F-69392 Lyon Cédex 03 (FR)

(54) **Introducteur-doseur pour produits pulvérulents, granulés, pâteux ou similaires.**

(57)    Cet introducteur-doseur alimente un récepteur (1) tel que réacteur industriel ou de laboratoire, à partir d'un contenant de stockage (2).

Il comprend un guide d'introduction tubulaire (7), dont l'extrémité aval est disposée à l'intérieur même du récepteur (1). Dans le guide d'introduction (7) sont disposés des moyens transporteurs, tels qu'une vis (12), s'étendant jusqu'à l'extrémité aval de ce guide (7). Un obturateur (20), situé à l'extrémité aval du guide (7), ferme cette extrémité lorsque les moyens transporteurs (12) ne sont pas actionnés. Le produit est ainsi introduit directement dans le récepteur (1), la quantité de produit introduite pouvant être contrôlée en permanence par des moyens de pesage (5, 6, 24) supportant tout l'ensemble d'introduction.

Application particulière : introduction de poudre.

EP 0 430 832 A1

## INTRODUCTEUR-DOSEUR POUR PRODUITS PULVERULENTS, GRANULES, PATEUX OU SIMILAIRES

La présente invention concerne un introducteur-doseur pour produits pulvérulents, granulés, pâteux ou similaires, cet introducteur-doseur étant destiné entre autres à équiper un réacteur industriel ou de laboratoire, devant être alimenté avec une matière sous forme de poudre ou de granulés introduite en quantités précises et contrôlables.

Il existe déjà divers types d'introducteurs de poudre, qui d'une façon générale n'assurent pas un dosage pondéral de la poudre distribuée et fonctionnent suivant un principe volumétrique relativement aléatoire.

Dans une réalisation existante, une vis transporteuse horizontale est disposée au-dessous d'un volume ouvert ou fermé, contenant la poudre à distribuer. La vis transporteuse est entraînée en rotation manuellement ou au moyen d'un moteur. Un clapet d'obturation est placé, avec ses moyens de commande, en regard de l'extrémité aval de la vis. Lorsque le clapet est en position d'ouverture, et que la vis est entraînée en rotation, la poudre est déplacée vers l'extrémité aval de cette vis, puis elle tombe dans une tubulure verticale raccordée au réacteur.

Ainsi, la poudre n'est pas distribuée directement à l'intérieur du réacteur, et la position de l'obturateur et de ses moyens de commande interdit toute introduction directe de la poudre par la vis dans le réacteur. De plus, en position de fermeture, l'obturateur ne peut ici assurer une bonne étanchéité aux vapeurs ou au vide en provenance du réacteur. Enfin, l'utilisateur doit étalonner l'appareil s'il veut se fixer un débit volumétrique d'introduction, et la quantité de poudre réellement introduite dans le réacteur reste de toute façon mal contrôlée, en raison de son introduction indirecte et du risque de stagnation de poudre entre l'extrémité aval de la vis et l'entrée du réacteur.

La présente invention vise à remédier aux inconvénients de cet appareil connu, en fournissant un introducteur-doseur qui introduit la poudre ou autre produit directement à l'intérieur d'un réacteur ou autre récepteur, sans risque de colmatage, tout en réalisant si nécessaire une obturation étanche entre le distributeur et le récepteur, et qui permet un contrôle précis et permanent de la quantité de produit introduite, notamment au sens d'un dosage pondéral.

A cet effet, l'invention a pour objet un introducteur-doseur pour produits pulvérulents, granulés, pâteux ou similaires, qui comprend essentiellement, en combinaison :

- un guide d'introduction du produit, dont l'extrémité aval est prévue pour être disposée à l'intérieur même d'un récepteur dans lequel le produit doit être introduit, et dont la partie amont est prévue pour être mise en relation avec un contenant de stockage du produit,

- des moyens transporteurs dudit produit, placés à l'intérieur du guide d'introduction et s'étendant jusqu'à l'extrémité aval de ce guide, donc jusqu'à l'intérieur même du récepteur, et

- des moyens d'obturation situés à l'extrémité aval du guide d'introduction, donc aussi à l'intérieur même du récepteur, avec des moyens de commande d'obturation qui libèrent l'extrémité aval du guide d'introduction simultanément à l'actionnement des moyens transporteurs précités, et qui ferment l'extrémité aval du guide d'introduction lorsque les moyens transporteurs ne sont pas actionnés.

Dans une forme de réalisation préférée de l'invention, l'introduteur-doseur comprend, en combinaison :

- un guide d'introduction du produit de conformation générale tubulaire, dont le débouché aval est prévu pour être situé à l'intérieur même du récepteur, pourvu d'une ouverture d'entrée correspondante, et dont la partie amont comporte un prolongement tubulaire prévu pour être mis en relation avec le contenant de stockage du produit,

- une vis transporteuse montée tournante à l'intérieur du guide d'introduction tubulaire, suivant l'axe de ce dernier, et liée à des moyens d'entraînement en rotation, l'extrémité aval de la vis transporteuse étant située au niveau du débouché du guide d'introduction tubulaire, et cette vis transporteuse comportant un arbre central creux déterminant un canal axial, et

- un obturateur situé à l'extrémité aval du guide d'introduction tubulaire et relié à des moyens de commande d'obturation par l'intermédiaire d'une tige qui traverse de part en part et de manière coulissante le canal axial de la vis transporteuse.

Ainsi, le produit est introduit directement dans le récepteur, par des moyens transporteurs tels qu'une vis d'Archimède qui déplace positivement le produit jusqu'à la sortie du guide d'introduction, donc jusqu'à l'intérieur même du récepteur, donnant ainsi la certitude que tout le produit déplacé jusqu'à l'extrémité aval de la vis est effectivement distribué. A l'inverse, lorsque les moyens transporteurs sont mis à l'arrêt, la fermeture de l'obturateur assure l'interdiction de toute entrée de produit à l'intérieur du récepteur. Par conséquent, la quantité de produit extraite du contenant de stockage et déplacée par la vis transporteuse correspond très rigoureusement à la quantité de produit introduite dans le récepteur.

Cette particularité avantageuse de l'introducteur-doseur de poudre selon la présente invention est notamment mise à profit dans une forme de réalisation préférentielle, selon laquelle le guide d'introduction du produit, le contenant de stockage du produit, les moyens transporteurs et les moyens d'obturation avec leurs moyens de commande constituent un ensemble d'introduction unitaire découplé du récepteur et lié à des moyens de pesage, qui déterminent à tout instant le poids et/ou les variations de poids de cet ensemble. Les moyens de pesage détectent ainsi la diminution de poids qui correspond à la quantité de produit extraite du contenant de stockage, donc nécessairement introduite dans le récepteur. De cette manière, un dosage pondéral du produit effectivement introduit dans le récepteur est réalisé en "temps réel". Les mesures effectuées sont exploitables manuellement ou de façon automatisée.

Le découplage entre l'ensemble unitaire précité est le récepteur est indispensable pour le pesage de cet ensemble uniquement, et il autorise aussi les faibles mouvements verticaux généralement nécessaires dans un système de pesage. Toutefois, une liaison flexible telle que par soufflet reste souhaitable entre le guide d'introduction du produit et la région du récepteur entourant son ouverture d'entrée. Cette liaison flexible, qui ne perturbe pas le pesage, assure l'étanchéité par exemple aux poussières et elle permet des fonctionnements sous pression ou sous vide pour le récepteur et pour l'ensemble d'introduction.

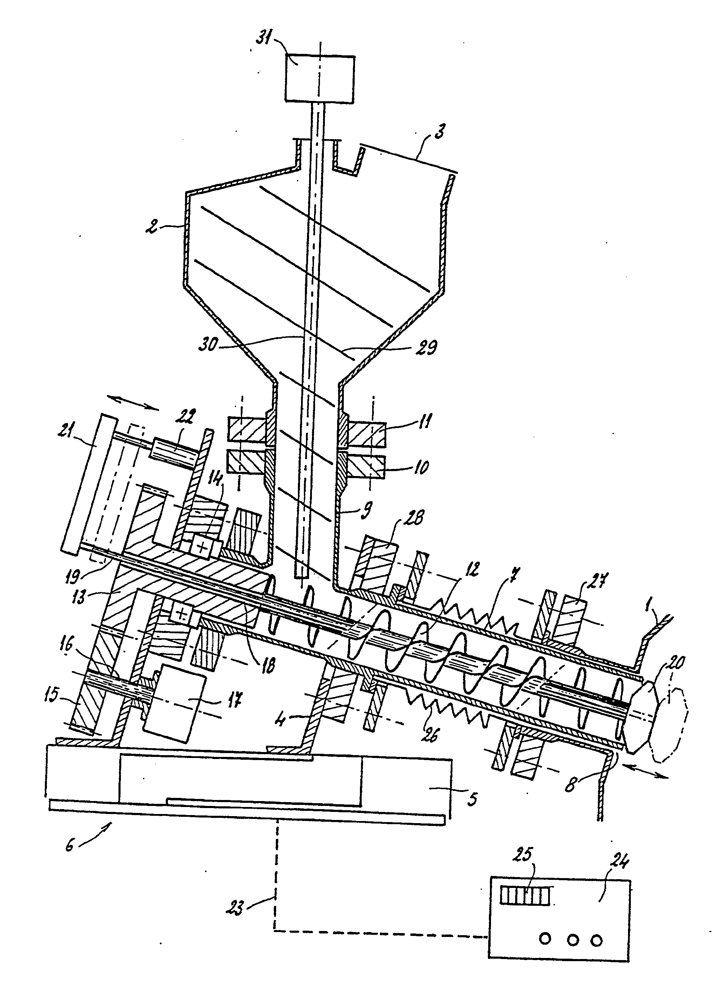

De toute façon, l'invention sera mieux comprise à l'aide de la description qui suit, en référence à l'unique figure du dessin schématique annexé représentant, à titre d'exemple non limitatif, une forme d'exécution de cet introducteur-doseur pour produits pulvérulents, granulés, pâteux ou similaires.

L'introducteur-doseur, représenté en coupe verticale sur le dessin, est prévu pour alimenter par exemple en poudre un récepteur 1 montré très partiellement, le produit pulvérulent ou autre à introduire se trouvant stocké dans un contenant 2 pourvu à sa partie supérieure d'une ouverture de remplissage 3. L'introducteur-doseur lui-même comporte un bâti 4, porté par un plateau 5 appartenant à un dispositif de pesage 6.

Le bâti 4 porte un guide d'introduction 7, de conformation générale tubulaire et d'axe incliné sur l'horizontale, réalisable en verre. L'extrémité inférieure ou aval du guide d'introduction 7 est engagée dans le récepteur 1 par une ouverture d'entrée circulaire 8 de ce dernier, sans contact direct entre cette extrémité du guide d'introduction 7 et le bord de l'ouverture 8. Vers sa partie supérieure ou amont, le guide d'introduction 7 comporte un prolongement tubulaire 9, d'axe vertical et/tourné vers le haut. L'extremite supérieure du prolongement tubulaire 9 est munie d'une bride 10, raccordée à une bride 11 prévue à l'extrémité inférieure ouverte du contenant de stockage 2.

A l'intérieur du guide d'introduction 7, suivant l'axe incliné de ce dernier, est monté tournante une vis transporteuse 12 dont l'extrémité inférieure ou aval se situe au niveau de l'extrémité inférieure du guide 7, donc à l'intérieur du récepteur 1. L'extrémité supérieure ou amont de la vis transporteuse 12 est solidaire d'un pignon d'entraînement 13, monté tournant dans un palier 14. Le pignon 13 est en prise avec un autre pignon 15, monté sur l'arbre de sortie 16 d'un moteur 17 fixé au bâti 4, le moteur 17 pouvant être électrique, pneumatique ou autre.

L'arbre central de la vis transporteuse 12 possède une conformation creuse déterminant un canal axial, et le pignon d'entraînement 13 de cette vis 12 comporte un passage central 18. Une tige d'obturation 19 traverse de part en part, avec possibilité de coulissement, le passage central 18 du pignon 13 ainsi que le canal axial de la vis 12. Un obturateur 20 est fixé à l'extrémité inférieure ou aval de la tige d'obturation 19 et se situe ainsi à l'intérieur du récepteur 1. L'extrémité supérieure de la tige d'obturation 19, éloignée de l'obturateur 20, est liée par une pièce intermédiaire 21 à un vérin de commande 22 lui-même fixé au bâti 4, le vérin 22 étant par exemple de type pneumatique.

Le dispositif de pesage 6 est raccordé, par une liaison électrique 23, à un appareil de mesure et de contrôle pondéral 24, pouvant comporter notamment des moyens d'affichage 25 qui indiquent à tout instant le poids supporté par le plateau 5.

Un soufflet 26 assure une liaison flexible entre une bride 27 fixée autour de l'ouverture d'entrée 8 du récepteur 1, d'une part, et une autre bride 28 fixée autour du guide d'introduction 7 et/ou au bâti 4.

Enfin, le contenant de stockage 2 peut renfermer un organe mobile de décolmatage tel qu'un fil 29 enroulé en hélice, porté par une tige verticale 30 entraînée en rotation au moyen d'un moteur 31, de type électrique, pneumatique ou autre.

En cours de fonctionnement, le moteur 31 entraîne en rotation l'organe de décolmatage 29, de manière à permettre une descente sûre de la poudre du contenant de stockage 2 vers la partie supérieure de la vis transporteuse 12. Le moteur 17 entraîne la vis 12 en rotation par l'intermédiaire des pignons 15 et 13, le sens de rotation de la vis 12 étant tel que celle-ci déplace la poudre en direction de l'extrémité inférieure du guide d'introduction 7.

Lorsque le moteur 17 est actionné, le vérin 22 est commandé de telle sorte que, par l'intermédiaire de la pièce de liaison 21 et de la tige 19, l'obturateur 20 se trouve éloigné de l'extrémité inférieure du guide 7 et de la vis 12 (position indiquée en traits mixtes). La poudre amenée par la vis transporteuse 12 jusqu'à l'extrémité inférieure du guide 7 tombe alors directement dans le récepteur 1.

Au contraire, lorsque le moteur 17 est mis à l'arrêt, la vis 12 n'est plus entraînée en rotation et, simultanément, le vérin 22 amène l'obturateur 20 en position de fermeture parfaitement étanche du débouché aval du guide d'introduction 7, de sorte que toute arrivée de poudre dans le récepteur 1 se trouve empêchée.

A tout moment, le dispositif de pesage 6 mesure le poids supporté par le plateau 5, qui est fonction de la quantité de produit stockée dans le contenant 2 et engagée dans le guide d'introduction 7. La diminution de cette quantité représente exactement le poids de poudre effectivement introduit dans le récepteur 1. L'appareil de mesure et de contrôle pondéral 24 donne en permanence une indication de ce poids, à partir de laquelle il est possible :

- soit de commander manuellement la mise en marche et l'arrêt du moteur 17 d'entraînement de la vis transporteuse 12 ;

- soit d'effectuer une exploitation automatique de la mesure, avec un système de régulation pilotant le moteur 17.

Le fonctionnement d'ensemble de l'introducteur-doseur peut être continu ou discontinu. Ce fonctionnement peut avoir lieu sous pression atmosphérique, sous une pression plus élevée ou sous vide partiel, pour le récepteur 1 et pour l'introducteur-doseur lui-même.

L'introducteur-doseur décrit précédemment est applicable non seulement à l'alimentation d'un récepteur 1 avec une poudre, mais aussi à l'introduction de produits solides sous forme de granulés ou sous une forme suffisamment divisée, ainsi qu'à l'introduction de produits pâteux, suffisamment visqueux. Cet introducteur-doseur est plus particulièrement utilisable pour l'introduction de produits dans des réacteurs industriels par exemple en acier vitrifié ou inoxydable, dans des réacteurs de laboratoire en verre, dans des extracteurs solide/liquide et autres appareils similaires, notamment dans le domaine de la chimie et dans l'industrie agroalimentaire.

Comme il va de soi, et comme il ressort de ce qui précède, l'invention ne se limite pas à la seule forme d'exécution de cet introducteur-doseur pour produits pulvérulents, granulés, pâteux ou similaires qui a été décrite ci-dessus, à titre d'exemple ; elle en embrasse, au contraire, toutes les variantes de réalisation et d'application respectant le même principe. C'est ainsi, notamment, que l'on ne s'éloignerait pas du cadre de l'invention par le recours à des moyens équivalents ou à des modifications de construction ou d'agencement, notamment en ce qui concerne :

- la vis transporteuse 12, remplaçable par tous moyens transporteurs adaptés aux produits à introduire, par exemple : piston pousseur, lit fluidisé, etc..., de préférence des moyens permettant une introduction continue ;

- le vérin 22, auquel peut être substitué tout actionneur apte à commander l'obturateur 20 ;

- l'inclinaison du guide d'introduction 7 du produit et de la vis transporteuse 12 ;

- le type d'énergie, tel qu'électrique, pneumatique, hydraulique ou autre, utilisé pour commander les fonctions motrices.

Cet introducteur-doseur peut encore être pourvu de dispositions complémentaires visant à en améliorer le fonctionnement, tels que notamment des moyens prévus pour l'injection d'un gaz par la tige d'obturation 19 et le passage du gaz au travers de la vis transporteuse 12, pour obtenir une fluidisation sur tout ou partie de la longueur de ladite vis.

## Revendications

1. Introducteur-doseur pour produits pulvérulents, granulés, pâteux ou similaires, caractérisé en ce qu'il comprend essentiellement, en combinaison:

    - un guide d'introduction (7) du produit, dont l'extrémité aval est prévue pour être disposée à l'intérieur même d'un récepteur (1) dans lequel le produit doit être introduit, et dont la partie amont (9) est prévue pour être mise en relation avec un contenant de stockage (2) du produit,

    - des moyens transporteurs (12) dudit produit, placés à l'intérieur du guide d'introduction (7) et s'étendant jusqu'à l'extrémité aval de ce guide, donc jusqu'à l'intérieur même du récepteur (1), et

    - des moyens d'obturation (20) situés à l'extrémité aval du guide d'introduction (7), donc aussi à l'intérieur même du récepteur (1), avec des moyens de commande d'obturation (19, 21, 22) qui libèrent l'extrémité aval du guide d'introduction (7) simultanément à l'actionnement des moyens transporteurs (12) précités, et qui ferment l'extrémité aval du guide d'introduction (7) lorsque les moyens transporteurs (12) ne sont pas actionnés.

2. Introducteur-doseur selon la revendication 1, caractérisé en ce qu'il comprend, en combinaison :

    - un guide d'introduction (7) du produit de conformation générale tubulaire, dont le débouché aval est prévu pour être situé à l'intérieur même du récepteur (1), pourvu d'une ouverture d'entrée (8) correspondante, et dont la partie amont comporte un prolongement tubulaire (9) prévu pour être mis en relation avec le contenant de stockage (2) du produit,

- une vis transporteuse (12) montée tournante à l'intérieur du guide d'introduction tubulaire (7), suivant l'axe de ce dernier, et liée à des moyens d'entraînement en rotation (13 à 17), l'extrémité aval de la vis transporteuse (12) étant située au niveau du débouché du guide d'introduction tubulaire (7), et cette vis transporteuse (12) comportant un arbre central creux déterminant un canal axial, et
- un obturateur (20) situé à l'extrémité aval du guide d'introduction tubulaire (7) et relié à des moyens de commande d'obturation (22) par l'intermédiaire d'une tige (19) qui traverse de part en part et de manière coulissante le canal axial de la vis transporteuse (12).

3. Introducteur-doseur selon la revendication 2, caractérisé en ce que l'extrémité amont de la vis transporteuse (12) est solidaire d'un pignon d'entraînement (13), qui comporte un passage central (18) également traversé par la tige d'obturation (19).

4. Introducteur-doseur selon la revendication 2 ou 3, caractérisé en ce que les moyens de commande d'obturation sont constitués par un vérin (22), lié à l'extrémité de la tige d'obturation (19) éloignée de l'obturateur (20).

5. Introducteur-doseur selon l'une quelconque des revendications 1 à 4, caractérisé en ce que le guide d'introduction (7) du produit, le contenant de stockage (2) du produit, les moyens transporteurs (12) et les moyens d'obturation (20) avec leurs moyens de commande (19, 21, 22) constituent un ensemble d'introduction unitaire découplé du récepteur (1) et lié à des moyens de pesage (5, 6, 23, 24, 25) qui déterminent à tout instant le poids et/ou les variations de poids de cet ensemble.

6. Introducteur-doseur selon la revendication 5, caractérisé en ce qu'une liaison flexible, telle que par soufflet (26), est prévue entre le guide d'introduction (7) du produit et la région du récepteur (1) entourant son ouverture d'entrée (8).

7. Introducteur-doseur selon l'une quelconque des revendications 2 à 4, caractérisé en ce que des moyens sont prévus pour l'injection d'un gaz par la tige d'obturation (19) et pour le passage du gaz au travers de la vis transporteuse (12), pour obtenir une fluidisation sur tout ou partie de la longueur de ladite vis.

**Office européen des brevets**

# RAPPORT DE RECHERCHE EUROPEENNE

Numero de la demande

EP 90 42 0517

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | GB-A- 893 572 (COAL INDUSTRY)<br>* En entier *<br>--- | 1 | B 65 G 65/46<br>B 01 J 3/02 |
| X | US-A-3 182 825 (ZELLERHOFF)<br>* En entier *<br>--- | 1 | |
| X | EP-A-0 036 943 (DEGUSSA)<br>* En entier *<br>--- | 1,2 | |
| X | EP-A-0 098 340 (CLAUDIUS PETERS)<br>* Figures *<br>----- | 1,2 | |

**DOMAINES TECHNIQUES RECHERCHES (Int. Cl.5)**

B 65 G
B 01 J

Le présent rapport a été établi pour toutes les revendications

| Lieu de la recherche | Date d'achèvement de la recherche | Examinateur |
|---|---|---|
| LA HAYE | 11-03-1991 | OSTYN T.J.M. |